(19) Europäisches Patentamt / European Patent Office / Office européen des brevets

(11) **EP 4 560 999 A1**

(12) **EUROPEAN PATENT APPLICATION**
published in accordance with Art. 153(4) EPC

(43) Date of publication:
**28.05.2025  Bulletin 2025/22**

(21) Application number: 23853864.9

(22) Date of filing: **21.03.2023**

(51) International Patent Classification (IPC):
**H04L 27/00** (2006.01)    **H04B 1/69** (2011.01)

(52) Cooperative Patent Classification (CPC):
**H04B 1/69; H04L 27/00**

(86) International application number:
**PCT/CN2023/082729**

(87) International publication number:
**WO 2024/036949 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022  CN 202211000990**
            **24.08.2022  CN 202211021969**

(71) Applicant: **Huawei Technologies Co., Ltd.**
**Shenzhen, Guangdong 518129 (CN)**

(72) Inventors:
• **LIU, Chenchen**
  **Shenzhen, Guangdong 518129 (CN)**
• **QIAN, Bin**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **SIGNAL PROCESSING METHOD AND APPARATUS**

(57)    Embodiments of this application are applied to a wireless local area network system that supports 802.11 series protocols, for example, a next-generation Wi-Fi protocol of IEEE 802.11ax, such as 802.11be, Wi-Fi 7, or EHT, or a next-generation protocol of 802.11be like Wi-Fi 8; and may be further applied to a UWB-based wireless personal area network system and a sensing system. Embodiments of this application provide a signal processing method and an apparatus. The method includes: receiving a first signal that is obtained based on a spread spectrum sequence set and N data symbols, where the spread spectrum sequence set includes M spread spectrum sequences whose lengths are L, the M spread spectrum sequences one-to-one correspond to M data symbols with different values, and values of $l^{th}$ chips in any two of the M spread spectrum sequences are the same; and performing frequency offset estimation based on the first signal. According to this application, the first signal includes a fixed signal segment, so that a receive end device can perform frequency offset estimation based on the first signal.

Method 600

FIG. 6

EP 4 560 999 A1

**Description**

This application claims priorities to Chinese Patent Application No. 202211021969.8, filed with the China National Intellectual Property Administration on August 24, 2022 and entitled "SIGNAL PROCESSING METHOD AND APPARATUS", and to Chinese Patent Application No. 202211000990.X, filed with the China National Intellectual Property Administration on August 19, 2022 and entitled "SIGNAL PROCESSING METHOD AND APPARATUS", both of which are incorporated herein by reference in their entireties.

**TECHNICAL FIELD**

Embodiments of this application relate to the communication field, and more specifically, to a signal processing method and an apparatus.

**BACKGROUND**

An ultra-wideband (ultra-wideband, UWB) technology is a wireless carrier communication technology in which data is transmitted through a nanosecond-level non-sinusoidal narrow pulse. In the UWB technology, the data is transmitted through a narrow pulse, and radiation spectrum density is low. Therefore, the UWB technology has advantages such as a strong multi-path resolution capability, low power consumption, and high confidentiality. Communication by using the UWB technology has become one of popular physical layer technologies in a short-range and high-speed wireless network.

Because a communication bandwidth of a device that uses the UWB technology for communication is large, power consumption of the device is high. To reduce power consumption of a UWB system, a narrowband (narrowband, NB) signal-assisted manner may be used, and all signals other than reference signals used for ranging and sensing are sent and received by using the narrowband system, thereby reducing overall power consumption overheads.

In a narrowband signal-assisted UWB scenario, if a receive end device may estimate a carrier frequency offset (carrier frequency offset, CFO) based on a received narrowband signal, the receive end device may perform channel compensation based on the CFO, and receive a UWB signal. Further, after receiving the UWB signal, the receive end device may further perform phase compensation on the UWB signal based on the CFO. However, based on an existing narrowband signal transmission solution, the receive end device cannot estimate the CFO based on the received narrowband signal.

**SUMMARY**

Embodiments of this application provide a signal processing method and an apparatus, so that a receive end device can estimate a carrier frequency offset based on a received signal.

According to a first aspect, a signal processing method is provided. The method may be performed by a communication device, or may be performed by a component (for example, a chip or a circuit) of a communication device. This is not limited. For ease of description, an example in which the method is performed by a receive end device is used below for description.

The method may include: receiving a first signal, where the first signal is obtained based on a spread spectrum sequence set and N data symbols, the spread spectrum sequence set includes M spread spectrum sequences whose lengths are L, the M spread spectrum sequences whose lengths are L one-to-one correspond to M data symbols with different values, values of $l^{th}$ chips included in any two of the M spread spectrum sequences whose lengths are L are the same, N, M, and L are positive integers, and $l=1$ or $l=L$; and performing frequency offset estimation based on the first signal.

That values of $l^{th}$ chips included in any two of the M spread spectrum sequences whose lengths are L are the same may be understood as that a value of a $1^{st}$ chip included in each spread spectrum sequence in the spread spectrum sequence set is a fixed value, or may be understood as that a value of a last chip included in each spread spectrum sequence in the spread spectrum sequence set is a fixed value.

Based on the foregoing technical solution, because the value of the $1^{st}$ chip in each spread spectrum sequence in the spread spectrum sequence set is the fixed value, or the value of the last chip in each spread spectrum sequence in the spread spectrum sequence set is the fixed value, a transmit end device obtains, based on the spread spectrum sequence set and the N data symbols, a periodic fixed signal segment included in the first signal, so that a receive end device can perform frequency offset estimation based on the periodic fixed signal segment included in the first signal.

In addition, compared with a manner of implementing frequency offset estimation by periodically inserting a known fixed chip sequence, the method provided in embodiments of this application does not increase additional overheads, and therefore does not increase air interface transmission time.

With reference to the first aspect, in some implementations of the first aspect, the first signal is obtained by modulating a second signal, the second signal is obtained by performing spread spectrum processing on the N data symbols based on the spread spectrum sequence set, and the second signal includes a first sub-signal and a second sub-signal. The first sub-signal is obtained by performing spread spectrum processing on a $(2n+1)^{th}$ data symbol in the N data symbols based on a first spread spectrum sequence in the spread spectrum sequence set, the first spread spectrum sequence corresponds to the $(2n+1)^{th}$ data symbol, n is an integer, and $0 \leq n \leq (N-1)/2$. The second sub-signal is obtained by performing spread spectrum processing on a $2n^{th}$ data symbol in the N symbols based on a second spread spectrum sequence, the second spread spectrum sequence is obtained by performing first processing on a third spread spectrum sequence that is in the spread spectrum sequence set and that corresponds to the $2n^{th}$ data symbol, and a value of an $|l-(L+1)|^{th}$ chip included in the second spread spectrum sequence is the same as a value of an $l^{th}$ chip included in the third spread spectrum sequence.

Based on the foregoing technical solution, because a value of an $l^{th.}$ chip included in the first spread spectrum sequence is the same as the value of the $l^{th}$ chip included in the third spread spectrum sequence, and the value of the $l^{th}$ chip included in the third spread spectrum sequence is the same as the value of the $|l-(L+1)|^{th}$ chip included in the second spread spectrum sequence, the value of the $l^{th}$ chip included in the first spread spectrum sequence is the same as the value of the $|l-(L+1)|^{th}$ chip included in the second spread spectrum sequence, that is, values of two chips in two consecutive data symbols are fixed. Further, even if the first signal is obtained by performing offset quadrature phase shift keying (offset quadrature phase shift keying, O-QPSK) modulation on the second signal, the first signal may also include the periodic fixed signal segment, so that the receive end device can perform frequency offset estimation based on the periodic fixed signal segment included in the first signal.

With reference to the first aspect, in some implementations of the first aspect, the first processing includes cyclic shifting and/or inversion.

With reference to the first aspect, in some implementations of the first aspect, a Hamming distance between any two different spread spectrum sequences in the spread spectrum sequence set is not less than 8.

Based on the foregoing technical solution, a minimum Hamming distance of the spread spectrum sequence set is not less than 8, so that spread spectrum sequences corresponding to different data symbols differ greatly. This can reduce a probability that the receive end device incorrectly determines the data symbol, and improve system transmission performance.

With reference to the first aspect, in some implementations of the first aspect, L=16, M=16, and in a matrix including the M spread spectrum sequences whose lengths are L, each column other than an $l^{th}$ column includes eight 1s and eight 0s, and each row of the matrix corresponds to one spread spectrum sequence in the spread spectrum sequence set.

Based on the foregoing technical solution, if in the matrix including the M spread spectrum **sequences** whose lengths are L, each column other than the $l^{th}$ column includes the eight 1s and the eight 0s, it can be ensured that the Hamming distance between the any two spread spectrum sequences included in the spread spectrum sequence set is not less than 8.

With reference to the first aspect, in some implementations of the first aspect, $l=1$, and the spread spectrum sequence set includes the following spread spectrum sequences: {1111111111111111}, {1010101010101010}, {1100110011001100}, {1001100110011001}, {1111000011110000}, {1010010110100101}, {1100001111000011}, {1001011010010110}, {1111111100000000}, {1010101001010101}, {1100110000110011}, {1001100101100110}, {1111000000001111}, {1010010101011010}, {1100001100111100}, and {1001011001101001}.

With reference to the first aspect, in some implementations of the first aspect, $l=L$, and the spread spectrum sequence set includes the following spread spectrum sequences: {1111111111111111}, {0010101010101011}, {0100110011001101}, {1001100110011001}, {0111000011110001}, {1010010110100101}, {1100001111000011}, {0001011010010111}, {0111111100000001}, {1010101001010101}, {1100110000110011}, {0001100101100111}, {1111000000001111}, {0010010101011011}, {0100001100111101}, and {1001011001101001}.

With reference to the first aspect, in some implementations of the first aspect, $l=1$, and the spread spectrum sequence set includes the following spread spectrum sequences: {1111111111111111}, {1111011001010000}, {1011011001010100}, {1001110110010100}, {1000111011001010}, {1000011101100101}, {1100001110110010}, {1010000111011001}, {1101000011101100}, {0101000011101100}, {1001010000111011}, {1100101000011101}, {1110010100001110}, {1011001010000111}, {1101100101000011}, and {1110110010100001}.

With reference to the first aspect, in some implementations of the first aspect, $l=L$, and the spread spectrum sequence set includes the following spread spectrum sequences: {1111111111111111}, {0111011001010001}, {0011101100101001}, {0001110110010101}, {0000111011001011}, {1000011101100101}, {0100001110110011}, {1010000111011001}, {0100001110110 1}, {0010100011101111}, {1001010000111011}, {1100101000011101}, {0110010100001111}, {1011001010000111}, {1101100101000011}, and {1

110110010100001}.

With reference to the first aspect, in some implementations of the first aspect, the first signal is obtained by performing offset quadrature phase shift keying modulation on the second signal.

With reference to the first aspect, in some implementations of the first aspect, the N data symbols are obtained based on a data bit included in a physical layer protocol data unit (physical layer protocol data unit, PPDU), and the receiving a first signal includes: receiving the first signal by using a narrowband.

Based on the foregoing technical solution, in a narrowband-assisted ultra-wideband (ultra-wideband, UWB) application scenario, if the receive end device receives the first signal by using the narrowband, the receive end device may perform frequency offset estimation based on the first signal. Further, the receive end device may perform channel compensation based on an estimated carrier frequency offset, to assist the receive end device in receiving a UWB signal. After receiving the UWB signal, the receive end device may further perform phase compensation on the UWB signal based on the estimated carrier frequency offset.

According to a second aspect, a signal processing method is provided. The method may be performed by a communication device, or may be performed by a component (for example, a chip or a circuit) of a communication device. This is not limited. For ease of description, an example in which the method is performed by a transmit end device is used below for description.

The method may include: obtaining a first signal based on a spread spectrum sequence set and N data symbols, where the spread spectrum sequence set includes M spread spectrum sequences whose lengths are L, the M spread spectrum sequences whose lengths are L one-to-one correspond to M data symbols with different values, values of $l^{th}$ chips included in any two of the M spread spectrum sequences whose lengths are L are the same, N, M, and L are positive integers, and $l=1$ or $l=L$; and sending the first signal.

For beneficial effect of any one of the second aspect or possible implementations of the second aspect, refer to the first aspect.

With reference to the second aspect, in some implementations of the second aspect, the obtaining a first signal based on a spread spectrum sequence set and N data symbols includes: performing spread spectrum processing on the N data symbols based on the spread spectrum sequence set to obtain a second signal; and modulating the second signal to obtain the first signal. The second signal includes a first sub-signal and a second sub-signal. The first sub-signal is obtained by performing spread spectrum processing on a $(2n+1)^{th}$ data symbol in the N data symbols based on a first spread spectrum sequence in the spread spectrum sequence set, the first spread spectrum sequence corresponds to the $(2n+1)^{th}$ data symbol, n is an integer, and $0 \leq n \leq (N-1)/2$. The second sub-signal is obtained by performing spread spectrum processing on a $2n^{th}$ data symbol in the N symbols based on a second spread spectrum sequence, the second spread spectrum sequence is obtained by performing first processing on a third spread spectrum sequence that is in the spread spectrum sequence set and that corresponds to the $2n^{th}$ data symbol, and a value of an $|l-(L+1)|^{th}$ chip included in the second spread spectrum sequence is the same as a value of an $l^{th}$ chip included in the third spread spectrum sequence.

With reference to the second aspect, in some implementations of the second aspect, the first processing includes cyclic shifting and/or inversion.

With reference to the second aspect, in some implementations of the second aspect, a Hamming distance between any two different spread spectrum sequences in the spread spectrum sequence set is not less than 8.

With reference to the second aspect, in some implementations of the second aspect, L=16, M=16, and in a matrix including the M spread spectrum sequences whose lengths are L, each column other than an $l^{th}$ column includes eight 1s and eight 0s, and each row of the matrix corresponds to one spread spectrum sequence in the spread spectrum sequence set.

With reference to the second aspect, in some implementations of the second aspect, $l=1$, and the spread spectrum sequence set includes the following spread spectrum sequences: {1 1 1 1 1 1 1 1 1 1 1 1 1 1 1 1}, {1 0 1 0 1 0 1 0 1 0 1 0 1 0 1 0}, {1 1 0 0 1 1 0 0 1 1 0 0 1 1 0 0}, {1 0 0 1 1 0 0 1 1 0 0 1 1 0 0 1}, {1 1 1 1 0 0 0 0 1 1 1 1 0 0 0 0}, {1 0 1 0 0 1 0 1 1 0 1 0 0 1 0 1}, {1 1 0 0 0 0 1 1 1 1 0 0 0 0 1 1}, {1 0 0 1 0 1 1 0 1 0 0 1 0 1 1 0}, {1 1 1 1 1 1 1 1 0 0 0 0 0 0 0 0}, {1 0 1 0 1 0 1 0 0 1 0 1 0 1 0 1}, {1 1 0 0 1 1 0 0 0 0 1 1 0 0 1 1}, {1 0 0 1 1 0 0 1 0 1 1 0 0 1 1 0}, {1 1 1 1 0 0 0 0 0 0 0 0 1 1 1 1}, {1 0 1 0 0 1 0 1 0 1 0 1 1 0 1 0}, {1 1 0 0 0 0 1 1 0 0 1 1 1 1 0 0}, and {1 0 0 1 0 1 1 0 0 1 1 0 1 0 0 1}.

With reference to the second aspect, in some implementations of the second aspect, $l=L$, and the spread spectrum sequence set includes the following spread spectrum sequences: {1 1 1 1 1 1 1 1 1 1 1 1 1 1 1 1}, {0 0 1 0 1 0 1 0 1 0 1 0 1 0 1 1}, {0 1 0 0 1 1 0 0 1 1 0 0 1 1 0 1}, {1 0 0 1 1 0 0 1 1 0 0 1 1 0 0 1}, {0 1 1 1 0 0 0 1 1 1 1 0 0 0 1}, {1 0 1 0 0 1 1 0 0 1 0 1}, {1 1 0 0 0 0 1 1 1 1 0 0 0 0 1 1}, {0 0 0 1 0 1 1 0 1 0 0 1 0 1 1 1}, {0 1 1 1 1 1 1 0 0 0 0 0 0 0 1}, {1 0 1 0 1 0 1 0 0 1 0 1 0 1 0 1}, {1 1 0 0 1 1 0 0 0 0 1 1 0 0 1 1}, {0 0 0 1 1 0 0 1 0 1 1 0 0 1 1 1}, {1 1 1 1 0 0 0 0 0 0 0 0 1 1 1 1}, {0 0 1 0 0 1 0 1 0 1 0 1 1 0 1 1}, {0 1 0 0 0 0 1 1 0 0 1 1 1 1 0 1}, and {1 0 0 1 0 1 1 0 0 1 1 0 1 0 0 1}.

With reference to the second aspect, in some implementations of the second aspect, $l=1$, and the spread spectrum sequence set includes the following spread spectrum sequences: {1 1 1 1 1 1 1 1 1 1 1 1 1 1 1 1}, {1 1 1 1 0 1 1 0 0 1 0 1 0 0 0 0}, {1 0 1 1 1 0 1 1 0 0 1 0 1 0 0 0}, {1 0 0 1 1 1 0 1 1 0 0 1 0 1 0 0}, {1 0 0 0 1 1 1 0 1 1 0 0 1 0 1 0}, {1 0 0 0 0 1 1 1 0 1 1 0 0 1 0 1}, {1 1 0 0 0 0 1 1 1 0 1 1 0 0 1 0}, {1 0 1 0 0 0 0 1 1 1 0 1 1 0 0 1}, {1 1 0 1 0 0 0 0 1 1 1 0 1 1 0 0}, {1 0 1 0 1 0 0 0 0 1 1 1 0 1 1 0}, {1 0 0 1 0 1 0

000111011}, {110010100001101}, {111000101000011110}, {101100101000001111}, {110110010100000011}, and {11101100101000001}.

With reference to the second aspect, in some implementations of the second aspect, $l$=L, and the spread spectrum sequence set includes the following spread spectrum sequences: {111111111111111111}, {01101100101000010001}, {0011101100101001}, {000111011001010101}, {00001110110010011}, {10000111011001001}, {01000011101100011}, {10100001110110001}, {01010000111011001}, {00101000011101111}, {10010100001110011}, {11001010000011101}, {0110010100001111}, {10110010100000111}, {110110010100000011}, and {11101100101000001}.

With reference to the second aspect, in some implementations of the second aspect, the modulating the second signal to obtain the first signal includes: performing offset quadrature phase shift keying modulation on the second signal to obtain the first signal.

With reference to the second aspect, in some implementations of the second aspect, the N data symbols are obtained based on a data bit included in a PPDU, and the sending the first signal includes: sending the first signal by using a narrowband.

According to a third aspect, an apparatus is provided. The apparatus is configured to perform the method according to any one of the implementations of the first aspect and the second aspect. Specifically, the apparatus may include units and/or modules configured to perform the method according to any one of the first aspect or the implementations of the first aspect, or include units and/or modules configured to perform the method according to any one of the second aspect or the implementations of the second aspect, for example, a processing unit and/or a transceiver unit.

In an implementation, the apparatus is a device (for example, a transmit end device or a receive end device). When the apparatus is a device, the transceiver unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a transmit end device or a receive end device). When the apparatus is a chip, a chip system, or a circuit used in a device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, an apparatus is provided. The apparatus includes: a memory, configured to store a program; and at least one processor, configured to execute a computer program or instructions stored in the memory, to perform the method according to any one of the implementations of the first aspect and the second aspect.

In an implementation, the apparatus is a device (for example, a transmit end device or a receive end device).

In another implementation, the apparatus is a chip, a chip system, or a circuit used in a device (for example, a transmit end device or a receive end device).

According to a fifth aspect, this application provides a processor, configured to perform the method according to the foregoing aspects.

Operations such as sending and/or receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code executed by a device. When the program code is run on a computer, the method according to any one of the implementations of the first aspect and the second aspect is performed.

According to a seventh aspect, a computer program product including instructions is provided. When the computer program product runs on a computer, the computer is enabled to perform the method according to any one of the implementations of the first aspect and the second aspect.

According to an eighth aspect, a chip is provided. The chip includes a processor and a communication interface. The processor reads, through the communication interface, instructions stored in a memory, to perform the method according to any one of the implementations of the first aspect and the second aspect.

Optionally, in an implementation, the chip further includes the memory. The memory stores a computer program or the instructions. The processor is configured to execute the computer program or instructions stored in the memory. When the computer program or instructions are executed, the processor is configured to perform the method according to any one of the implementations of the first aspect and the second aspect.

According to a ninth aspect, a communication system is provided, including the foregoing transmit end device and the foregoing receive end device.

## BRIEF DESCRIPTION OF DRAWINGS

FIG. 1 is a diagram of two application scenarios applicable to an embodiment of this application;

FIG. 2 is a diagram of a structure of a PPDU to which an embodiment of this application is applicable;

FIG. 3 is a schematic flowchart of performing modulation through O-QPSK modulation and spectrum spreading on a signal by a transmit end;

FIG. 4 is a diagram of a chip offset in O-QPSK modulation;

FIG. 5 is a diagram of a baseband chip sequence formed after pulse shaping is performed on a modulated signal;

FIG. 6 is a schematic flowchart of a signal processing method according to an embodiment of this application;

FIG. 7 is a diagram of a chip offset in O-QPSK modulation;

FIG. 8 is a diagram of an apparatus 1000 according to an embodiment of this application;

FIG. 9 is a diagram of an apparatus 2000 according to an embodiment of this application; and

FIG. 10 is a diagram of a chip system 3000 according to an embodiment of this application.

## DESCRIPTION OF EMBODIMENTS

The following describes technical solutions of embodiments in this application with reference to accompanying drawings.

The technical solutions of this application may be applied to a wireless personal area network (wireless personal area network, WPAN). A standard used for the WPAN is the Institute of Electrical and Electronics Engineers (institute of electrical and electronics engineers, IEEE) 802.15 series. The WPAN may be used for communication between digital auxiliary devices within a small range, such as a telephone, a computer, and an auxiliary device, and an operation range of the WPAN is usually within 10 meters (m). For example, technologies that support the wireless personal area network include but are not limited to Bluetooth (Bluetooth), ZigBee (ZigBee), ultra-wideband (ultra-wideband, UWB), an infrared connection technology of the Infrared Data Association (infrared data association, IrDA), home radio frequency (HomeRF), and the like. From a perspective of network composition, the WPAN may be located at a bottom layer of an entire network architecture and is used for a wireless connection between devices within a small range, namely, a point-to-point short-range connection. The WPAN may be considered as a short-range wireless communication network. Based on different application scenarios, WPANs may be classified into a high rate (high rate, HR)-WPAN and a low rate (low rate, LR)-WPAN. The HR-WPAN may be used to support various high-rate multimedia applications, including high-quality audio and video delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. The RFD is mainly used for simple control applications such as a light switch or a passive infrared sensor. The RFD transmits a small amount of data, occupies a small amount of transmission resources and communication resources, and has low costs. FFDs may communicate with each other, and an FFD and an RFD may also communicate with each other. Usually, RFDs do not directly communicate with each other, but communicate with an FFD or forward data to the outside through an FFD. An FFD associated with an RFD may also be referred to as a coordinator (coordinator) of the RFD. The coordinator may also be referred to as a personal area network (personal area network, PAN) coordinator, a central control node, or the like. The PAN coordinator is a main control node of the entire network, and each ad hoc network has one PAN coordinator that is mainly configured to perform member identity management, link information management, and packet forwarding functions. Optionally, the device in embodiments of this application may be a device that supports a plurality of WPAN standards, such as 802.15.4a, 802.15.4z, a currently discussed version, or a later version.

In this application, the device may be a tag, a communication server, a router, a switch, a bridge, a computer, a mobile phone, a smart home device, a vehicle-mounted communication device, a wearable device, or the like. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement all or some functions without depending on smartphones, for example, smart watches or smart glasses, and devices that focus on only one type of application function and need to work with other devices such as smartphones, for example, various smart bands or smart jewelry for monitoring physical signs.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that the entity can run a program that records code of the method provided in embodiments of this application to perform communication according to the method provided in embodiments of this application. For example, the method provided in embodiments of this application may be performed by an FFD, or an RFD, or a functional module that is in an FFD or an RFD and that can invoke the program and execute the program.

The foregoing descriptions of the WPAN are merely examples for description, and do not limit the protection scope of embodiments of this application.

This application is applied to a wireless local area network system that supports 802.11 series protocols, for example, a next-generation wireless fidelity (wireless fidelity, Wi-Fi) protocol of IEEE 802.11ax, such as 802.11be, Wi-Fi 7, or extremely high throughput (extremely high throughput, EHT), or for another example, a next-generation protocol of 802.11be, Wi-Fi 8, or Wi-Fi artificial intelligence (artificial intelligence, AI), and may be further applied to a UWB-based wireless personal area network system or a sensing (sensing) system. It should be noted that the following describes embodiments of this application by using an example in which this application is applied to a UWB-based wireless personal area network system.

It may be understood that embodiments of this application may be further applied to another communication system, for example, a 6th generation (6th generation, 6G) mobile communication system, a 5th generation (5th generation, 5G) system, or a long term evolution (long term evolution, LTE) system. Embodiments of this application may be further applied to future communication systems. Embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. Communication systems applicable to this application are not limited thereto. This is stated herein once for all, and is not repeated below.

In embodiments of this application, a transmit end device and/or a receive end device may be a station (station, STA) in a wireless local area network (wireless local area network, WLAN). For example, the station may be a mobile phone, a tablet computer, a set-top box, a smart television, a smart wearable device, a vehicle-mounted communication device, or a computer supporting a Wi-Fi communication function. Optionally, the station may support the 802.11be standard. The station may also support a plurality of WLAN standards of the 802.11 family, such as 802.11be, 802.11ax, 802.11ac, 802.11n, 802.11g, 802.11b, and 802.11a.

In addition, the transmit end device and/or the receive end device in embodiments of this application may alternatively be an access point (access point, AP) in a WLAN. The access point may be an access point for a terminal device (for example, a mobile phone) to access a wired (or wireless) network, and is mainly deployed in a home, a building, or a campus, with a typical coverage radius ranging from tens of meters to hundreds of meters, or certainly, may be deployed outdoors. The access point is equivalent to a bridge that connects a wired network and a wireless network. A main function of the access point is connecting various wireless network clients together and then connecting the wireless network to the Ethernet. Specifically, the access point may be a terminal device (for example, a mobile phone) or a network device (for example, a router) with a Wi-Fi chip. The access point may be a device that supports the 802.11be standard. The access point may alternatively be a device supporting a plurality of WLAN standards of the 802.11 family, such as 802.11be, 802.11ax, 802.11ac, 802.11n, 802.11g, 802.11b, and 802.11a.

The access point and the station may alternatively be devices applied to an internet of vehicles, internet of things nodes, sensors, or the like in an internet of things (internet of things, IoT), smart cameras, smart remote controls, or smart water or electricity meters in a smart home, sensors in a smart city, or the like.

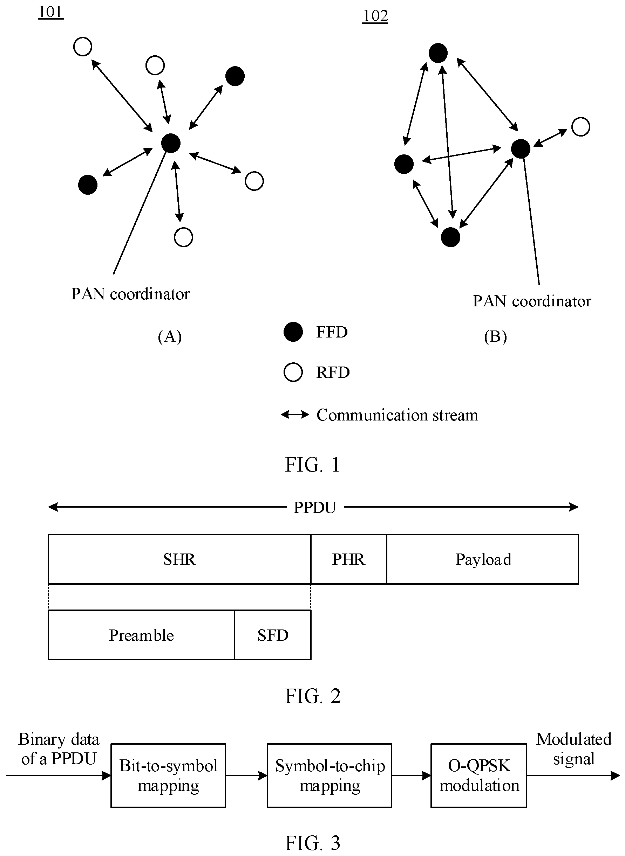

The following briefly describes, with reference to FIG. 1, an application scenario to which this application is applicable.

FIG. 1 is a diagram of two application scenarios according to this application. A system 101 shown in (A) in FIG. 1 is a communication system with a star topology (star topology), and a system 102 shown in (B) in FIG. 1 is a communication system with a peer-to-peer topology (peer-to-peer topology).

As shown in (A) in FIG. 1, the system 101 may include a plurality of FFDs and a plurality of RFDs, and the plurality of FFDs and the plurality of RFDs may form the communication system with a star topology. One of the plurality of FFDs is a PAN coordinator. In the communication system with the star topology, the PAN coordinator may perform data transmission with one or more other devices. To be specific, a one-to-many or many-to-one data transmission architecture may be established between a plurality of devices.

As shown in (B) in FIG. 1, the system 102 may include a plurality of FFDs and one RFD, and the plurality of FFDs and the RFD may form the communication system with a peer-to-peer topology. One of the plurality of FFDs is a PAN coordinator. In the communication system with the peer-to-peer topology, a many-to-many data transmission architecture may be established between a plurality of different devices.

It should be understood that (A) in FIG. 1 and (B) in FIG. 1 are merely simplified diagrams as examples for ease of understanding, and do not constitute a limitation on an application scenario of this application. For example, the system 101 and/or the system 102 may further include other FFDs and/or RFDs.

In a UWB technology, data may be transmitted through a nanosecond-level non-sinusoidal narrow pulse, and the UWB technology occupies a quite wide spectrum range. In the UWB technology, data is transmitted through a narrow pulse, and radiation spectrum density is quite low. Therefore, the UWB technology has advantages such as a strong multi-path resolution capability, low power consumption, and high confidentiality. Currently, the UWB technology has been written into IEEE 802 series wireless standards, and the UWB technology-based WPAN standard IEEE 802.15.4a and its evolution version IEEE 802.15.4z have been released. Currently, formulation of the next-generation WPAN standard 802.15.4ab of the UWB technology has been put on the agenda.

Because the UWB technology performs data transmission through receiving and sending of nanosecond-level or sub-nanosecond-level and extremely narrow impulses rather than by using a carrier in a conventional communication system, the UWB technology has a high requirement on time synchronization of a transceiver device. In addition, due to large communication bandwidth of the UWB technology, the devices have high power consumption and complexity when a signal is received and sent on an ultra-wideband channel, and most UWB communication devices are driven by a battery. It is expected to further reduce power consumption of the UWB system in a next generation standard. Therefore, all signals except reference signals for ranging and sensing are received and sent in a narrowband system in a narrowband (narrowband, NB) signal-assisted manner. This reduces overall power consumption overheads.

A narrowband signal is a signal whose effective bandwidth of a source signal is much smaller than a carrier frequency or a center frequency of the source signal. In actual communication, a frequency band resource allocated to user equipment and a real propagation environment are collaboratively referred to as a channel, and the channel has a specific spectrum feature. Generally, if the allocated frequency band resource is wider, the propagation environment is more stable, and a data rate that can be allowed by the channel is higher. In a spectrum for a signal waveform, a signal bandwidth (or referred to as a "source feature") is represented as $\Delta f$, and the carrier frequency (or referred to as a "channel feature") is represented as $fc$. When $\Delta f$ is far less than $fc$, the system is the narrowband system. It can be learned that both a "narrowband channel" and a "narrowband signal" are actually defined in a same category, and complement each other.

FIG. 2 is a diagram of a structure of a physical protocol data unit (physical protocol data unit, PPDU) of a narrowband signal. As shown in FIG. 2, the PPDU of the narrowband signal includes a preamble (preamble), a start-of-frame delimiter (start-of-frame delimiter, SFD), a physical header (physical header, PHR), and a physical layer (physical layer, PHY) payload (payload) field, and the PHY payload field may also be understood as a physical layer service data unit (physical layer service data unit, PSDU). In addition, the preamble and the start-of-frame delimiter may also be collectively referred to as a synchronization header (synchronization header, SHR).

A narrowband signal used to assist the UWB may be sent in an offset quadrature phase shift keying (offset quadrature phase shift keying, O-QPSK) modulation scheme. To enhance system robustness, before O-QPSK modulation, a transmit end device maps four pieces of encoded (or unencoded) bit information to a spread spectrum sequence of a specific length. Further, a receive end device may determine, by using the spread spectrum sequence, the bit information sent by the transmit end device.

FIG. 3 is a schematic flowchart of performing modulation through O-QPSK modulation and spectrum spreading on a signal by a transmit end device. As shown in FIG. 3, the transmit end device obtains a modulated signal (modulated signal) after sequentially performing bit-to-symbol (bit-to-symbol) mapping, symbol-to-chip (symbol-to-chip) mapping, and O-QPSK modulation (O-QPSK modulation) on binary data (binary data) in the PPDU, and the transmit end device sends the modulated signal.

Specifically, in a process in which the transmit end device performs bit-to-symbol mapping on the binary data in the PPDU, the binary data in the PPDU is mapped to one data symbol (data symbol) by using every 4 bits as a group. For example, based on a mapping relationship shown in Table 1, the transmit end may map 4 binary bits "0000" to a data symbol "0". For another example, based on a mapping relationship shown in Table 1, the transmit end may map 4 binary bits "1000" to a data symbol "1". In a process of performing symbol-to-chip mapping, the transmit end device maps each data symbol to a spread spectrum sequence with a length of 16. For example, based on the mapping relationship shown in Table 1, the transmit end device may map the data symbol "0" to a spread spectrum sequence {0011 1110 0010 0101} .

Table 1

| Binary bits ($b_0$ $b_1$ $b_2$ $b_3$) | Data symbol | Chip values (chip values) ($c_0$, $c_1$, ..., and $c_5$) |
|---|---|---|
| 0000 | 0 | 0011 1110 0010 0101 |

(continued)

| Binary bits ($b_0$ $b_1$ $b_2$ $b_3$) | Data symbol | Chip values (chip values) ($c_0$, $c_1$, ..., and $c_5$) |
|---|---|---|
| 1000 | 1 | 0100 1111 1000 1001 |
| 0100 | 2 | 0101 0011 1110 0010 |
| 1100 | 3 | 1001 0100 1111 1000 |
| 0010 | 4 | 0010 0101 0011 1110 |
| 1010 | 5 | 1000 1001 0100 1111 |
| 0110 | 6 | 1110 0010 0101 0011 |
| 1110 | 7 | 1111 1000 1001 0100 |
| 0001 | 8 | 0110 1011 0111 0000 |
| 1001 | 9 | 0001 1010 1101 1100 |
| 0101 | 10 | 0000 0110 1011 0111 |
| 1101 | 11 | 1100 0001 1010 1101 |
| 0011 | 12 | 0111 0000 0110 1011 |
| 1011 | 13 | 1101 1100 0001 1010 |
| 0111 | 14 | 1011 0111 0000 0110 |
| 1111 | 15 | 1010 1101 1100 0001 |

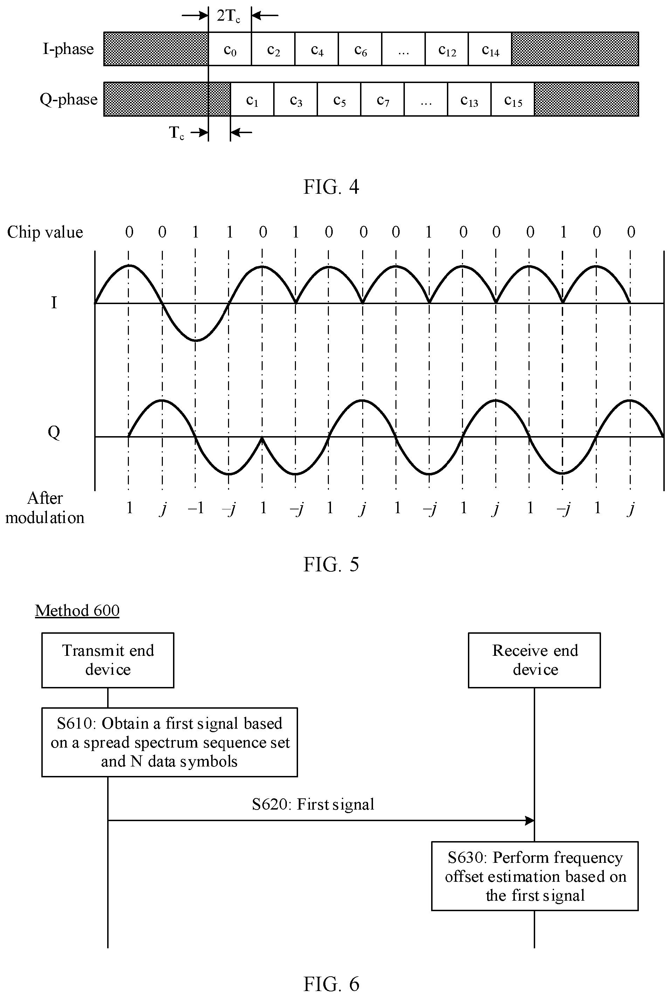

FIG. 4 is a diagram of a chip offset in O-QPSK modulation. As shown in FIG. 4, in the O-QPSK modulation, an even-indexed chip is modulated onto an in-phase (in-phase, I-phase) carrier and a quadrature-phase (quadrature-phase, Q-phase) carrier. A chip on the quadrature-phase carrier is delayed by one piece of chip time (that is, $T_c$) relative to a chip on the in-phase carrier, thereby forming an offset between in-phase chip modulation and quadrature chip modulation. A baseband chip sequence is formed after pulse shaping is performed on a modulated signal. When half sine function pulse shaping is used, a formed baseband chip sequence is shown in FIG. 5, where j in FIG. 5 indicates an imaginary unit.

In a narrowband signal-assisted UWB scenario, if a receive end device may estimate a carrier frequency offset (carrier frequency offset, CFO) based on a received narrowband signal, the receive end device may perform channel compensation based on the CFO, and receive a UWB signal. Further, after receiving the UWB signal, the receive end device may further perform phase compensation on the UWB signal based on the CFO. However, based on an existing narrowband signal transmission solution, the receive end device cannot estimate the CFO based on the received narrowband signal.

In view of this, embodiments of this application provide a signal processing method, so that a receive end device can estimate a carrier frequency offset based on a received signal.

For ease of understanding of embodiments of this application, the following descriptions are provided.

"First" and "second" shown in this application are merely for ease of description, and are used to distinguish between objects, but are not intended to limit the scope of embodiments of this application. For example, "first" and "second" are used to distinguish between different spread spectrum sequences, but are not intended to describe a specific order or sequence. It should be understood that objects described in such a way are interchangeable in an appropriate circumstance, so that a solution other than embodiments of this application can be described.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects. In addition, in the descriptions of this application, "a plurality of" means two or more than two unless otherwise specified.

Without loss of generality, the following describes in detail the signal processing method provided in embodiments of this application by using interaction between a transmit end device and a receive end device as an example.

By way of example, and not limitation, the transmit end device may be a device having a communication capability in a WPAN, for example, an FFD or an RFD. Similarly, the receive end device may also be a device having a communication capability in the WPAN, for example, an FFD or an RFD.

It should be understood that specific types of the transmit end device and the receive end device are not limited in embodiments of this application, provided that the transmit end device and the receive end device have signal receiving and sending functions.

FIG. 6 is a schematic flowchart of a signal processing method 600 according to an embodiment of this application. The method includes the following steps.

S610: A transmit end device obtains a first signal based on a spread spectrum sequence set and N data symbols.

The spread spectrum sequence set includes M spread spectrum sequences whose lengths are L, the M spread spectrum sequences whose lengths are L one-to-one correspond to M data symbols with different values, values of $l^{th}$ chips included in any two of the M spread spectrum sequences whose lengths are L are the same, N, M, and L are positive integers, and $l=1$ or $l=L$. In other words, a value of a $1^{st}$ chip included in each spread spectrum sequence in the spread spectrum sequence set is a fixed value, or a value of a last chip included in each spread spectrum sequence in the spread spectrum sequence set is a fixed value. For example, the fixed value is 1 or 0. That the length of the spread spectrum sequence is L may also be understood as that the spread spectrum sequence includes L chips.

The N data symbols are determined based on N' data bits, where N' is a positive integer. For example, one of the N data symbols is obtained by mapping 4 data bits in the N' data bits, and different data symbols in the N data symbols are obtained by mapping different data bits in the N' data bits. Mapping the 4 data bits to obtain one data symbol means that 4 bits of binary data are mapped to one decimal data symbol.

For example, the N' data bits are data bits included in a PPDU. To be specific, the N' data bits include a data bit constituting a preamble in the PPDU, a data bit constituting an SFD in the PPDU, a data bit constituting a PHR in the PPDU, and a data bit constituting a payload in the PPDU.

It may be understood that, because 4 bits may form 16 different pieces of binary data, when one data symbol is obtained by mapping 4 data bits, there are also 16 possible values of the data symbol, in other words, the possible values of the data symbol are from 0 to 15. Further, to implement spread spectrum processing on data symbols with different values, the spread spectrum sequence set may include 16 spread spectrum sequences whose lengths are L.

It should be understood that the spread spectrum sequence set may alternatively include more spread spectrum sequences, or include fewer spread spectrum sequences. This is not limited in this embodiment of this application. For example, if one data symbol is obtained by mapping 2 data bits, the spread spectrum sequence set may include four spread spectrum sequences whose lengths are L. For another example, if one data symbol is obtained by mapping 8 data bits, the spread spectrum sequence set may include 64 spread spectrum sequences whose lengths are L.

Optionally, a minimum Hamming distance (Hamming distance) of the spread spectrum sequence set is not less than 8. In other words, a Hamming distance between any two spread spectrum sequences in the spread spectrum sequence set is not less than 8. A minimum value of the Hamming distance between the any two spread spectrum sequences in the spread spectrum sequence set is referred to as the minimum Hamming distance of the spread spectrum sequence set. The Hamming distance between the two spread spectrum sequences is a quantity of chips with different values at corresponding positions of the two spreading sequences. In other words, the Hamming distance between the two sequences is a quantity of chips that need to be replaced when one spread spectrum sequence is transformed into another spread spectrum sequence. For example, a Hamming distance between a spread spectrum sequence {1 1 1 1 1 1 1 1 1 1 1 1 1 1 1 1} and a spread spectrum sequence { 1 0 1 0 1 0 1 0 1 0 1 0 1 0 1 0} is 8.

If the spread spectrum sequence set includes the M spread spectrum sequences, when every two of the spread spectrum sequences included in the spread spectrum sequence set are combined, a total of M(M-1)/2 different spread spectrum sequence combinations may be formed. It is assumed that a value of an $i^{th}$ chip included in each of k spread spectrum sequences is 1, and a value of an $i^{th}$ chip included in each of (M-k) spread spectrum sequences is 0. In this case, a sum of Hamming distances contributed by the $i^{th}$ chips to the M(M-1)/2 spread spectrum sequence combinations is equal to k(M-k), both the k spread spectrum sequences and the (M-k) spread spectrum sequences belong to the M spread spectrum sequences, k is a positive integer, $1 \leq i \leq L$, and i is not equal to $l$.

Further, if k is used as an independent variable of the quadratic function, the sum of the Hamming distances contributed by the $i^{th}$ chips to the M(M-1)/2 spread spectrum sequence combinations is used as a dependent variable of the quadratic function, and M is used as a coefficient, it can be learned based on a property of the quadratic function that when k=M/2, the sum of the Hamming distances contributed by the $i^{th}$ chips to the M(M-1)/2 spread spectrum sequence combinations is the largest (equal to $M^2/4$). As described above, the value of the $1^{st}$ chip in each of the M spread spectrum sequences is the fixed value, or the value of the last chip in each of the M spread spectrum sequences is the fixed value. In other words, when the length of the spread spectrum sequence is L, a quantity of chips that can contribute Hamming distances to the M(M-1)/2 spread spectrum sequence combinations is (L-1). Therefore, a maximum value of a sum of the Hamming distances of the M(M-1)/2 spread spectrum sequence combinations is $\dfrac{(L-1) \times M^2}{4}$. Further, it can be learned that the Hamming distance between the any two spread spectrum sequences in the spread spectrum sequence set is not greater than $\dfrac{2 \times (L-1) \times M^2}{4M(M-1)}$ .

It can be learned from the foregoing that if M=16, the minimum Hamming distance of the spread spectrum sequence set is not greater than 8(L-1)/15. Therefore, to ensure that the Hamming distance between the any two spread spectrum sequences in the spread spectrum sequence set is not less than 8, the length L of the spread spectrum sequence is at least 16.

For example, the length L of the spread spectrum sequence is 16. Based on the foregoing analysis, if L=16, to ensure that the Hamming distance between the any two spread spectrum sequences in the spread spectrum sequence set is not less than 8, values of $i^{th}$ chips in M/2 spread spectrum sequences in the M spread spectrum sequences are 1, and values of $i^{th}$ chips in the other M/2 spread spectrum sequences are 0. If each of the M spread spectrum sequences is used as one row of a matrix, an $i^{th}$ column of the matrix including the spread spectrum sequence set includes M/2 1s and M/2 0s. In other words, because i is not equal to $l$, in the matrix including the spread spectrum sequence set, each column other than an $l^{th}$ column includes the M/2 1s and the M/2 0s. For example, if M=16 and L=16, in the matrix including the spread spectrum sequence set, each column other than the $l^{th}$ column includes eight 1s and eight 0s.

For example, M=16, L=16, and the spread spectrum sequences included in the spread spectrum sequence set provided in this embodiment of this application are shown in Table 2. Table 2 further shows an example of a correspondence between a spread spectrum sequence and a data symbol.

Table 2

| Data symbol | Chip values ($c_0$, $c_1$, ..., and cs) |
|:---:|:---:|
| 0 | 1 1 1 1 1 1 1 1 1 1 1 1 1 1 1 1 |
| 1 | 1 0 1 0 1 0 1 0 1 0 1 0 1 0 1 0 |
| 2 | 1 1 0 0 1 1 0 0 1 1 0 0 1 1 0 0 |
| 3 | 1 0 0 1 1 0 0 1 1 0 0 1 1 0 0 1 |
| 4 | 1 1 1 1 0 0 0 0 1 1 1 1 0 0 0 0 |
| 5 | 1 0 1 0 0 1 0 1 1 0 1 0 0 1 0 1 |
| 6 | 1 1 0 0 0 0 1 1 1 1 0 0 0 0 1 1 |
| 7 | 1 0 0 1 0 1 1 0 1 0 0 1 0 1 1 0 |
| 8 | 1 1 1 1 1 1 1 1 0 0 0 0 0 0 0 0 |
| 9 | 1 0 1 0 1 0 1 0 0 1 0 1 0 1 0 1 |
| 10 | 1 1 0 0 1 1 0 0 0 0 1 1 0 0 1 1 |
| 11 | 1 0 0 1 1 0 0 1 0 1 1 0 0 1 1 0 |
| 12 | 1 1 1 1 0 0 0 0 0 0 0 0 1 1 1 1 |
| 13 | 1 0 1 0 0 1 0 1 0 1 0 1 1 0 1 0 |
| 14 | 1 1 0 0 0 0 1 1 0 0 1 1 1 1 0 0 |
| 15 | 1 0 0 1 0 1 1 0 0 1 1 0 1 1 0 0 1 |

A matrix Hi including the 16 spread spectrum sequences shown in Table 2 may be represented as:

$$\mathbf{H}_1 = \begin{bmatrix} 1 & 1 & 1 & 1 & 1 & 1 & 1 & 1 & 1 & 1 & 1 & 1 & 1 & 1 & 1 & 1 \\ 1 & 0 & 1 & 0 & 1 & 0 & 1 & 0 & 1 & 0 & 1 & 0 & 1 & 0 & 1 & 0 \\ 1 & 1 & 0 & 0 & 1 & 1 & 0 & 0 & 1 & 1 & 0 & 0 & 1 & 1 & 0 & 0 \\ 1 & 0 & 0 & 1 & 1 & 0 & 0 & 1 & 1 & 0 & 0 & 1 & 1 & 0 & 0 & 1 \\ 1 & 1 & 1 & 1 & 0 & 0 & 0 & 0 & 1 & 1 & 1 & 1 & 0 & 0 & 0 & 0 \\ 1 & 0 & 1 & 0 & 0 & 1 & 0 & 1 & 1 & 0 & 1 & 0 & 0 & 1 & 0 & 1 \\ 1 & 1 & 0 & 0 & 0 & 0 & 1 & 1 & 1 & 1 & 0 & 0 & 0 & 0 & 1 & 1 \\ 1 & 0 & 0 & 1 & 0 & 1 & 1 & 0 & 1 & 0 & 0 & 1 & 0 & 1 & 1 & 0 \\ 1 & 1 & 1 & 1 & 1 & 1 & 1 & 1 & 0 & 0 & 0 & 0 & 0 & 0 & 0 & 0 \\ 1 & 0 & 1 & 0 & 1 & 0 & 1 & 0 & 0 & 1 & 0 & 1 & 0 & 1 & 0 & 1 \\ 1 & 1 & 0 & 0 & 1 & 1 & 0 & 0 & 0 & 0 & 1 & 1 & 0 & 0 & 1 & 1 \\ 1 & 0 & 0 & 1 & 1 & 0 & 0 & 1 & 0 & 1 & 1 & 0 & 0 & 1 & 1 & 0 \\ 1 & 1 & 1 & 1 & 0 & 0 & 0 & 0 & 0 & 0 & 0 & 0 & 1 & 1 & 1 & 1 \\ 1 & 0 & 1 & 0 & 0 & 1 & 0 & 1 & 0 & 1 & 0 & 1 & 1 & 0 & 1 & 0 \\ 1 & 1 & 0 & 0 & 0 & 0 & 1 & 1 & 0 & 0 & 1 & 1 & 1 & 1 & 0 & 0 \\ 1 & 0 & 0 & 1 & 0 & 1 & 1 & 0 & 0 & 1 & 1 & 0 & 1 & 0 & 0 & 1 \end{bmatrix}.$$

It can be learned that each of the 2nd column to the 16th column of the matrix Hi includes the eight 1s and the eight 0s.

For another example, M=16, L=16, and the sequences included in the spread spectrum sequence set provided in this embodiment of this application are shown in Table 3. Table 3 further shows an example of a correspondence between a spread spectrum sequence and a data symbol.

Table 3

| Data symbol | Chip values ($c_0$, $c_1$, ..., and $c_5$) |
|---|---|
| 0 | 1 1 1 1 1 1 1 1 1 1 1 1 1 1 1 1 |
| 1 | 1 1 1 1 0 1 1 0 0 1 0 1 0 0 0 0 |
| 2 | 1 0 1 1 1 0 1 1 0 0 1 0 1 0 0 0 |
| 3 | 1 0 0 1 1 1 0 1 1 0 0 1 0 1 0 0 |
| 4 | 1 0 0 0 1 1 1 0 1 1 0 0 1 0 1 0 |
| 5 | 1 0 0 0 0 1 1 1 0 1 1 0 0 1 0 1 |
| 6 | 1 1 0 0 0 0 1 1 1 0 1 1 0 0 1 0 |
| 7 | 1 0 1 0 0 0 0 1 1 1 0 1 1 0 0 1 |
| 8 | 1 1 0 1 0 0 0 0 1 1 1 0 1 1 0 0 |
| 9 | 1 0 1 0 1 0 0 0 0 1 1 1 0 1 1 0 |
| 10 | 1 0 0 1 0 1 0 0 0 0 1 1 1 0 1 1 |
| 11 | 1 1 0 0 1 0 1 0 0 0 0 1 1 1 0 1 |
| 12 | 1 1 1 0 0 1 0 1 0 0 0 0 1 1 1 0 |
| 13 | 1 0 1 1 0 0 1 0 1 0 0 0 0 1 1 1 |
| 14 | 1 1 0 1 1 0 0 1 0 1 0 0 0 0 1 1 |
| 15 | 1 1 1 0 1 1 0 0 1 0 1 0 0 0 0 1 |

A matrix $\mathbf{H}_2$ including the 16 spread spectrum sequences shown in Table 3 may be represented as:

$$\mathbf{H}_2 = \begin{bmatrix}
1 & 1 & 1 & 1 & 1 & 1 & 1 & 1 & 1 & 1 & 1 & 1 & 1 & 1 & 1 & 1 \\
1 & 1 & 1 & 1 & 0 & 1 & 1 & 0 & 0 & 1 & 0 & 1 & 0 & 0 & 0 & 0 \\
1 & 0 & 1 & 1 & 1 & 0 & 1 & 1 & 0 & 0 & 1 & 0 & 1 & 0 & 0 & 0 \\
1 & 0 & 0 & 1 & 1 & 1 & 0 & 1 & 1 & 0 & 0 & 1 & 0 & 1 & 0 & 0 \\
1 & 0 & 0 & 0 & 1 & 1 & 1 & 0 & 1 & 1 & 0 & 0 & 1 & 0 & 1 & 0 \\
1 & 0 & 0 & 0 & 0 & 1 & 1 & 1 & 0 & 1 & 1 & 0 & 0 & 1 & 0 & 1 \\
1 & 1 & 0 & 0 & 0 & 0 & 1 & 1 & 1 & 0 & 1 & 1 & 0 & 0 & 1 & 0 \\
1 & 0 & 1 & 0 & 0 & 0 & 0 & 1 & 1 & 1 & 0 & 1 & 1 & 0 & 0 & 1 \\
1 & 1 & 0 & 1 & 0 & 0 & 0 & 0 & 1 & 1 & 1 & 0 & 1 & 1 & 0 & 0 \\
1 & 0 & 1 & 0 & 1 & 0 & 0 & 0 & 0 & 1 & 1 & 1 & 0 & 1 & 1 & 0 \\
1 & 0 & 0 & 1 & 0 & 1 & 0 & 0 & 0 & 0 & 1 & 1 & 1 & 0 & 1 & 1 \\
1 & 1 & 0 & 0 & 1 & 0 & 1 & 0 & 0 & 0 & 0 & 1 & 1 & 1 & 0 & 1 \\
1 & 1 & 1 & 0 & 0 & 1 & 0 & 1 & 0 & 0 & 0 & 0 & 1 & 1 & 1 & 0 \\
1 & 0 & 1 & 1 & 0 & 0 & 1 & 0 & 1 & 0 & 0 & 0 & 0 & 1 & 1 & 1 \\
1 & 1 & 0 & 1 & 1 & 0 & 0 & 1 & 0 & 1 & 0 & 0 & 0 & 0 & 1 & 1 \\
1 & 1 & 1 & 0 & 1 & 1 & 0 & 0 & 1 & 0 & 1 & 0 & 0 & 0 & 0 & 1
\end{bmatrix}.$$

It can be learned that each of the 2$^{nd}$ column to the 16$^{th}$ column of the matrix $\mathbf{H}_2$ includes the eight 1s and the eight 0s.

It should be noted that the correspondences between the spread spectrum sequences and the data symbols with different values shown in Table 2 and Table 3 are merely examples. This is not limited in this embodiment of this application, provided that the spread spectrum sequences one-to-one correspond to the data symbols with different values. For example, an example of another correspondence between spread spectrum sequences and data symbols with different values shown in Table 2 is as follows: a 1$^{st}$ spread spectrum sequence {1 1 1 1 1 1 1 1 1 1 1 1 1 1 1 1} shown in Table 2 corresponds to a data symbol whose value is 15, a 2$^{nd}$ spread spectrum sequence {1 0 1 0 1 0 1 0 1 0 1 0 1 0 1 0} shown in Table 2 corresponds to a data symbol whose value is 14, ..., and a 16$^{th}$ spread spectrum sequence {1 0 0 1 0 1 1 0 0 1 1 0 1 0 0 1} shown in Table 2 corresponds to a data symbol whose value is 0.

It should be further noted that the spread spectrum sequences shown in Table 2 and Table 3 are merely examples. A specific form of the spread spectrum sequence included in the spread spectrum sequence set is not limited in this embodiment of this application, and provided that the value of the 1$^{st}$ chip in each spread spectrum sequence in the spread spectrum sequence set is the fixed value, and optionally, the Hamming distance between the any two spread spectrum sequences in the spread spectrum sequence set is not less than 8; or provided that the value of the last chip in each spread spectrum sequence in the spread spectrum sequence set is the fixed value, and optionally, the Hamming distance between the any two spread spectrum sequences in the spread spectrum sequence set is not less than 8.

For example, M=16, L=16, and each spread spectrum sequence included in the spread spectrum sequence set may be a variant of the spread spectrum sequence shown in Table 2 or Table 3. For example, after the 1$^{st}$ chip and the last chip in each spread spectrum sequence shown in Table 2 or Table 3 are exchanged, 16 new spread spectrum sequences are obtained, and then the spread spectrum sequence set may include the 16 new spread spectrum sequences. Alternatively, 16 new spread spectrum sequences are obtained after any plurality of chips other than the $l^{th}$ chip in each spread spectrum sequence shown in Table 2 or Table 3 are exchanged. For example, the 2$^{nd}$ chip and the 4$^{th}$ chip in each spread spectrum sequence shown in Table 2 or Table 3 are exchanged, and the 7$^{th}$ chip and the 8$^{th}$ chip in each spread spectrum sequence shown in Table 2 or Table 3 are exchanged, so that the spread spectrum sequence set may include the 16 new spread spectrum sequences. Alternatively, 16 new spread spectrum sequences are obtained after a value of a q$^{th}$ chip in each spread spectrum sequence shown in Table 2 or Table 3 is negated, the spread spectrum sequence set includes the 16 new chip sequences, and q=1, 2, 3, ..., 16. Negating the value of the chip refers to changing the value of the chip from 1 to 0, or changing the value of the chip from 0 to 1.

It should be noted that a transformation operation on the spread spectrum sequence shown in Table 2 or Table 3 may include a plurality of the foregoing operations. For example, after the 1$^{st}$ chip and the last chip in each spread spectrum sequence shown in Table 2 or Table 3 are exchanged, 16 intermediate spread spectrum sequences are obtained. After a value of a q$^{th}$ chip in each of the 16 intermediate spread spectrum sequences is negated, 16 new spread spectrum sequences are obtained, so that the spread spectrum sequence set may include the 16 new spread spectrum sequences.

In a possible implementation, that a transmit end device obtains a first signal based on a spread spectrum sequence set and N data symbols includes: The transmit end device obtains a second signal after mapping, according to a correspondence between the M spread spectrum sequences included in the spread spectrum sequence set and the M data symbols with different values, each of the N data symbols to a spread spectrum sequence corresponding to the data symbol. The transmit end device modulates the second signal to obtain the first signal.

In a possible implementation, that a transmit end device obtains a first signal based on a spread spectrum sequence set and N data symbols includes: The transmit end device performs spread spectrum processing on the N data symbols based on the spread spectrum sequence set to obtain a second signal; and modulates the second signal to obtain the first signal. The second signal includes a first sub-signal and a second sub-signal. The first sub-signal is obtained by the transmit end device by performing spread spectrum processing on a $(2n+1)^{th}$ data symbol in the N data symbols based on a first spread spectrum sequence in the spread spectrum sequence set, the first spread spectrum sequence corresponds to the $(2n+1)^{th}$ data symbol, n is an integer, and $0 \leq n \leq (N-1)/2$. The second sub-signal is obtained by the transmit end device by performing spread spectrum processing on a $2n^{th}$ data symbol in the N data symbols based on a second spread spectrum sequence, the second spread spectrum sequence is obtained by performing first processing on a third spread spectrum sequence that is in the spread spectrum sequence set and that corresponds to the $2n^{th}$ data symbol, and a value of an $|l-(L+1)|^{th}$ chip included in the second spread spectrum sequence is the same as a value of an $l^{th}$ chip included in the third spread spectrum sequence.

That the transmit end device performs spread spectrum processing on the $(2n+1)^{th}$ data symbol based on the first spread spectrum sequence to obtain the first sub-signal means that the transmit end device maps the $(2n+1)^{th}$ data symbol to the first spread spectrum sequence.

That the transmit end device performs spread spectrum processing on the $2n^{th}$ data symbol based on the second spread spectrum sequence to obtain the second sub-signal means that the transmit end device maps the $2n^{th}$ data symbol to the second spread spectrum sequence.

The first processing includes cyclic shifting and/or inversion. The inversion may be understood as head-to-tail inversion or inversion. For example, a result of inversion performed on the spread spectrum sequence { 1 1 1 1 0 1 1 0 0 1 0 1 0 0 0 0} is {0 0 0 0 1 0 1 0 0 1 1 0 1 1 1 1}. It should be noted that a specific form of the first processing is not limited in this embodiment of this application, provided that the value of the $|l-(L+1)|^{th}$ chip in the second spread spectrum sequence obtained by performing first processing on the third spread spectrum sequence is the same as the value of the $l^{th}$ chip in the third spread spectrum sequence. For example, the first processing may include exchanging the $1^{st}$ chip and the last chip in the spread spectrum sequence.

In a possible implementation, that a transmit end device obtains a first signal based on a spread spectrum sequence set and N data symbols includes: The transmit end device performs spread spectrum processing on the N data symbols based on the spread spectrum sequence set to obtain a second signal; and modulates the second signal to obtain the first signal. The second signal includes a first sub-signal and a second sub-signal. The first sub-signal is obtained by the transmit end device by performing spread spectrum processing on a $(2n+1)^{th}$ data symbol in the N data symbols based on a fourth spread spectrum sequence, the fourth spread spectrum sequence is obtained by performing first processing on a first spread spectrum sequence corresponding to the $(2n+1)^{th}$ data symbol in the spread spectrum sequence set, and a value of an $|l-(L+1)|^{th}$ chip included in the fourth spread spectrum sequence is the same as a value of an $l^{th}$ chip included in the first spread spectrum sequence. The second sub-signal is obtained by the transmit end device by performing spread spectrum processing on a $2n^{th}$ data symbol in the N data symbols based on a third spread spectrum sequence in the spread spectrum sequence set, and the third spread spectrum sequence corresponds to the $2n^{th}$ data symbol.

For example, that the transmit end device modulates the second signal to obtain the first signal includes: The transmit end device performs O-QPSK modulation on the second signal to obtain the first signal, or the transmit end device may modulate the second signal by using another modulation scheme different from O-QPSK modulation to obtain the first signal.

S620: The transmit end device sends the first signal.

Correspondingly, a receive end device receives the first signal.

For example, that the transmit end device sends the first signal includes: The transmit end device sends the first signal by using a narrowband. For example, if the N data symbols are determined based on the N' data bits included in the PPDU of a narrowband signal, the transmit end device may send the first signal by using the narrowband.

Correspondingly, the receive end device receives the first signal by using the narrowband.

S630: The receive end device performs frequency offset estimation based on the first signal.

After receiving the first signal, the receive end device may perform frequency offset estimation based on the first signal.

As described above, because the value of the $1^{st}$ chip in each spread spectrum sequence in the spread spectrum sequence set is the fixed value, or the value of the last chip in each spread spectrum sequence in the spread spectrum sequence set is the fixed value, the transmit end device obtains, based on the spread spectrum sequence set and the N data symbols, a periodic fixed signal segment included in the first signal. Correspondingly, after receiving the first signal, the receive end device may perform frequency offset estimation based on the periodic fixed signal segment included in the first signal.

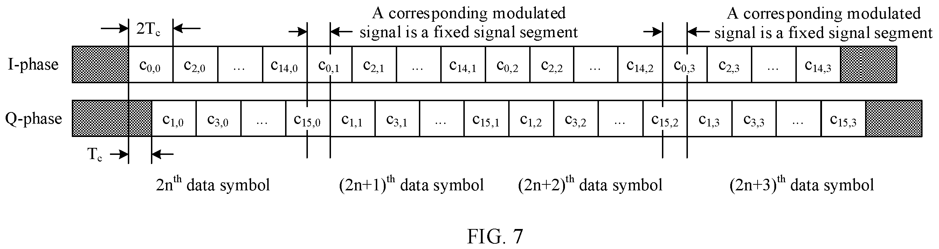

It is assumed that the value of the $1^{st}$ chip in each spread spectrum sequence in the spread spectrum sequence set is the fixed value, and the transmit end device performs spread spectrum processing on the $(2n+1)^{th}$ data symbol based on the first spread spectrum sequence in the spread spectrum sequence set, and performs spread spectrum processing on the $2n^{th}$ data symbol based on the second spread spectrum sequence. In a diagram of a chip offset in O-QPSK modulation shown in FIG. 7, a value of a last chip (that is, $c_{15,0}$) corresponding to the $2n^{th}$ data symbol is a fixed value, a $1^{st}$ chip (that is, $c_{0,1}$) corresponding to the $(2n+1)^{th}$ data symbol is a fixed value, a value of a last chip (that is, $c_{15,2}$)

corresponding to a $(2n+2)^{th}$ data symbol is a fixed value, and a value of a $1^{st}$ chip (that is, $c_{0,3}$) corresponding to a $(2n+3)^{th}$ data symbol is a fixed value. Because the chip $c_{15,0}$ partially overlaps the chip $c_{0,1}$, a modulated signal corresponding to an overlapping part between the chip $c_{15,0}$ and the chip $c_{0,1}$ is a fixed signal segment. Similarly, a modulated signal corresponding to an overlapping part between the chip $c_{15,2}$ and the chip $c_{0,3}$ is a fixed signal segment. Further, the receive end device may determine a carrier frequency offset based on a phase difference between the two fixed signal segments and duration (that is, $32T_c$) of an interval between the two fixed signal segments. In other words, the carrier frequency offset is equal to a ratio of the phase difference between the two fixed signal segments to the duration of the interval between the two fixed signal segments.

For example, in a narrowband-assisted UWB application scenario, after the receive end device receives the first signal by using the narrowband, and performs frequency offset estimation based on the first signal, the receive end device may perform channel compensation based on the estimated carrier frequency offset, to assist the receive end device in receiving a UWB signal. Further, after receiving the UWB signal, the receive end device may further perform phase compensation on the UWB signal based on the estimated carrier frequency offset.

In this embodiment of this application, because the value of the $1^{st}$ chip in each spread spectrum sequence in the spread spectrum sequence set is the fixed value, or the value of the last chip in each spread spectrum sequence in the spread spectrum sequence set is the fixed value, the transmit end device performs spread spectrum processing on the N data symbols based on the spread spectrum sequence set to obtain the second signal, and then modulates the second signal to obtain the periodic fixed signal segment included in the first signal, so that the receive end device can perform frequency offset estimation based on the periodic fixed signal segment included in the first signal.

In addition, the minimum Hamming distance of the spread spectrum sequence set provided in this embodiment of this application is not less than 8, so that spread spectrum sequences obtained by mapping different data symbols differ greatly. This can reduce a probability that the receive end device incorrectly determines the data symbol, and improve system transmission performance.

In addition, compared with a manner of implementing frequency offset estimation by periodically inserting a known fixed chip sequence, the method provided in embodiments of this application does not increase additional overheads, and therefore does not increase air interface transmission time.

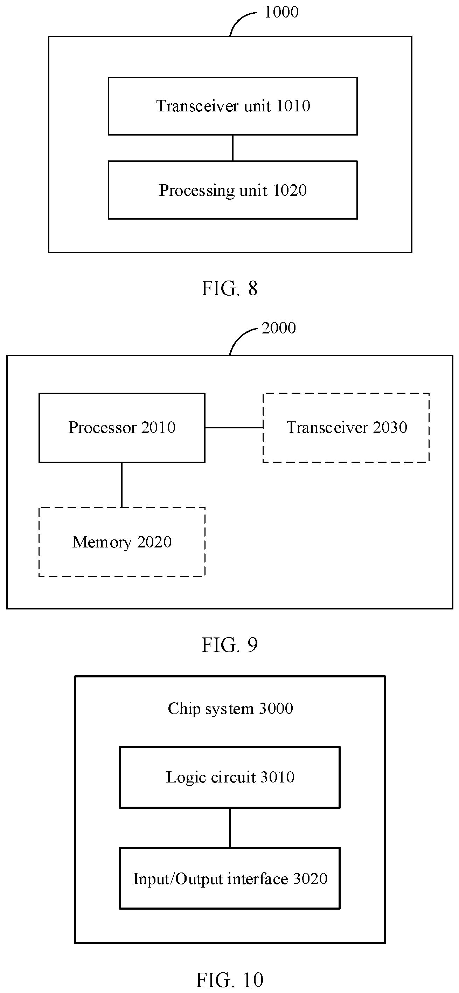

FIG. 8 is a block diagram of an apparatus according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a communication unit.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

In a first design, the apparatus 1000 may be the transmit end device in the foregoing embodiments, or may be a component (for example, a chip) of the transmit end device. The apparatus 1000 may implement the steps or the processes performed by the transmit end device in the foregoing method embodiments. The transceiver unit 1010 may be configured to perform a sending/receiving-related operation performed by the transmit end device in the foregoing method embodiments. The processing unit 1020 may be configured to perform a processing-related operation performed by the transmit end device in the foregoing method embodiments.

In a possible implementation, the processing unit 1020 is configured to obtain a first signal based on a spread spectrum sequence set and N data symbols. The spread spectrum sequence set includes M spread spectrum sequences whose lengths are L, the M spread spectrum sequences whose lengths are L one-to-one correspond to M data symbols with different values, values of $l^{th}$ chips included in any two of the M spread spectrum sequences whose lengths are L are the same, N, M, and L are positive integers, and $l=1$ or $l=L$. The transceiver unit 1010 is configured to send the first signal.

In a second design, the apparatus 1000 may be the receive end device in the foregoing embodiments, or may be a component (for example, a chip) of the receive end device. The apparatus 1000 may implement the steps or the processes performed by the receive end device in the foregoing method embodiments. The transceiver unit 1010 may be configured to perform a sending/receiving-related operation performed by the receive end device in the foregoing method embodiments. The processing unit 1020 may be configured to perform a processing-related operation performed by the receive end device in the foregoing method embodiments.

In a possible implementation, the transceiver unit 1010 is configured to receive a first signal. The first signal is obtained based on a spread spectrum sequence set and N data symbols, the spread spectrum sequence set includes M spread spectrum sequences whose lengths are L, the M spread spectrum sequences whose lengths are L one-to-one correspond to M data symbols with different values, values of $l^{th}$ chips included in any two of the M spread spectrum sequences whose lengths are L are the same, N, M, and L are positive integers, and $l=1$ or $l=L$. The processing unit 1020 is configured to perform frequency offset estimation based on the first signal.

It should be understood that a specific process in which the units perform the foregoing corresponding steps is described in detail in the foregoing method embodiments. For brevity, details are not described herein.

It should also be understood that the apparatus 1000 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) and a memory that are configured to execute one or more software or firmware programs, a combined logic circuit, and/or another appropriate component supporting the described function. In an optional example, a person skilled in the art can understand that the apparatus 1000 may be specifically the transmit end device in the foregoing embodiments, and may be configured to perform the processes and/or the steps corresponding to the transmit end device in the foregoing method embodiments; or the apparatus 1000 may be specifically the receive end device in the foregoing embodiments, and may be configured to perform the processes and/or the steps corresponding to the receive end device in the foregoing method embodiments. To avoid repetition, details are not described herein again. The transceiver unit 1010 may alternatively be a transceiver circuit (for example, may include a receiver circuit and a transmitter circuit), and the processing unit 1020 may be a processing circuit. The apparatus in FIG. 8 may be a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The apparatus 1000 in the foregoing solutions has a function of implementing corresponding steps performed by the transmit end device or the receive end device in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

FIG. 9 is a diagram of an apparatus 2000 according to an embodiment of this application. The apparatus 2000 includes a processor 2010. The processor 2010 is configured to execute a computer program or instructions stored in a memory 2020, or read data or the instructions stored in the memory 2020, to perform the methods in the foregoing method embodiments. Optionally, there are one or more processors 2010.

Optionally, as shown in FIG. 9, the apparatus 2000 further includes the memory 2020, and the memory 2020 is configured to store the computer program or instructions and/or the data. The memory 2020 may be integrated with the processor 2010, or may be disposed separately. Optionally, there are one or more memories 2020.

Optionally, as shown in FIG. 9, the apparatus 2000 further includes a transceiver 2030, and the transceiver 2030 is configured to receive and/or send a signal. For example, the processor 2010 is configured to control the transceiver 2030 to receive the signal and/or send the signal.

In a solution, the apparatus 2000 is configured to implement the operations performed by the transmit end device in the foregoing method embodiments.

For example, the processor 2010 is configured to execute the computer program or instructions stored in the memory 2020, to implement related operations of the transmit end device in the foregoing method embodiments, for example, the method performed by the transmit end device in the embodiment shown in FIG. 6.

In another solution, the apparatus 2000 is configured to implement the method performed by the receive end device in the foregoing method embodiments.

For example, the processor 2010 is configured to execute the computer program or instructions stored in the memory 2020, to implement related operations of the receive end device in the foregoing method embodiments, for example, the method performed by the receive end device in the embodiment shown in FIG. 6.

It should be understood that, the processor mentioned in embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification is intended to include but is not limited to these memories and any other appropriate type of memory.

FIG. 10 is a diagram of a chip system 3000 according to an embodiment of this application. The chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling to the chip system 3000 for processing.

Specifically, for example, if the chip system 3000 is installed in a transmit end device, the logic circuit 3010 is coupled to the input/output interface 3020, and the logic circuit 3010 may send a first signal through the input/output interface 3020. The first signal may be generated by the logic circuit 3010. For another example, if the chip system 3000 is installed in a receive end device, the logic circuit 3010 is coupled to the input/output interface 3020, the logic circuit 3010 may receive a first signal through the input/output interface 3020, and the logic circuit 3020 performs frequency offset estimation based on the first signal.

In a solution, the chip system 3000 is configured to implement the operations performed by the transmit end device in the foregoing method embodiments.

For example, the logic circuit 3010 is configured to implement a processing-related operation performed by the transmit end device in the foregoing method embodiments, for example, a processing-related operation performed by the transmit end device in the embodiment shown in FIG. 6. The input/output interface 3020 is configured to implement an operation related to sending and/or receiving performed by the transmit end device in the foregoing method embodiments, for example, a processing-related operation performed by the transmit end device in the embodiment shown in FIG. 6.

In another solution, the chip system 3000 is configured to implement the operations performed by the receive end device in the foregoing method embodiments.

For example, the logic circuit 3010 is configured to implement a processing-related operation performed by the receive end device in the foregoing method embodiments, for example, a processing-related operation performed by the receive end device in the embodiment shown in FIG. 6. The input/output interface 3020 is configured to implement an operation related to sending and/or receiving performed by the receive end device in the foregoing method embodiments, for example, a processing-related operation performed by the receive end device in the embodiment shown in FIG. 6.

An embodiment of this application further provides a computer-readable storage medium. The computer-readable storage medium stores computer instructions for implementing the methods performed by a device in the foregoing method embodiments.

For example, when the computer program is executed by a computer, the computer is enabled to implement the method performed by the transmit end device in the foregoing method embodiments.

For another example, when the computer program is executed by a computer, the computer is enabled to implement the method performed by the receive end device in the foregoing method embodiments.

An embodiment of this application further provides a computer program product, including instructions. When the instructions are executed by a computer, a method performed by a device (for example, the transmit end device, or for another example, the receive end device) in the foregoing method embodiments is implemented.

An embodiment of this application further provides a communication system, including the foregoing transmit end device and receive end device.

For explanations and beneficial effect of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic forms, mechanical forms, or other forms.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, comprising:

   receiving a first signal, wherein the first signal is obtained based on a spread spectrum sequence set and N data symbols, the spread spectrum sequence set comprises M spread spectrum sequences whose lengths are L, the M spread spectrum sequences whose lengths are L one-to-one correspond to M data symbols with different values, values of $l^{th}$ chips comprised in any two of the M spread spectrum sequences whose lengths are L are the same, N, M, and L are positive integers, and $l=1$ or $l=L$; and
   performing frequency offset estimation based on the first signal.

2. The method according to claim 1, wherein the first signal is obtained by modulating a second signal, the second signal is obtained by performing spread spectrum processing on the N data symbols based on the spread spectrum sequence set, and the second signal comprises a first sub-signal and a second sub-signal;

   the first sub-signal is obtained by performing spread spectrum processing on a $(2n+1)^{th}$ data symbol in the N data symbols based on a first spread spectrum sequence in the spread spectrum sequence set, the first spread spectrum sequence corresponds to the $(2n+1)^{th}$ data symbol, n is an integer, and $0 \leq n \leq (N-1)/2$; and
   the second sub-signal is obtained by performing spread spectrum processing on a $2n^{th}$ data symbol in the N symbols based on a second spread spectrum sequence, the second spread spectrum sequence is obtained by performing first processing on a third spread spectrum sequence that is in the spread spectrum sequence set and that corresponds to the $2n^{th}$ data symbol, and a value of an $|l-(L+1)|^{th}$ chip comprised in the second spread spectrum sequence is the same as a value of an $l^{th}$ chip comprised in the third spread spectrum sequence.

3. The method according to claim 2, wherein the first processing comprises cyclic shifting and/or inversion.

4. The method according to any one of claims 1 to 3, wherein a Hamming distance between any two different spread spectrum sequences in the spread spectrum sequence set is not less than 8.

5. The method according to claim 4, wherein L=16, M=16, and in a matrix comprising the M spread spectrum sequences whose lengths are L, each column other than an $l^{th}$ column comprises eight 1s and eight 0s, and each row of the matrix corresponds to one spread spectrum sequence in the spread spectrum sequence set.

6. The method according to claim 5, wherein $l=1$, and the spread spectrum sequence set **comprises** the following spread spectrum sequences:

{1 1 1 1 1 1 1 1 1 1 1 1 1 1 1 1}, { 1 0 1 0 1 0 1 0 1 0 1 0 1 0 1 0}, {1 1 0 0 1 1 0 0 1 1 0 0 1 1 0 0},{1001100110011001},{1111000011110000},{1010010110100 1 0 1}, {1 1 0 0 0 0 1 1 1 0 0 0 0 1 1}, {1 0 0 1 0 1 1 0 1 0 0 1 0 1 1 0},{1 1 1 1 1 1 1 1 0 0 0 0 0 0 0 0},{1 0 1 0 1 0 1 0 0 1 0 1 0 1 0 1},{1 1 0 0 1 1 0 0 0 0 1 1 0 0 1 1},{1 0 0 1 1 0 0 1 0 1 1 0 0 1 1 0},{1 1 1 1 0 0 0 0 0 0 0 0 1 1 1 1},{1 0 1 0 0 1 0 1 0 1 0 1 1 0 1 0},{1 1 0 0 0 0 1 1 0 0 1 1 1 1 0 0}, and {1 0 0 1 0 1 1 0 0 1 1 0 1 0 0 1}.

7. The method according to claim 5, wherein $l = L$, and the spread spectrum sequence set comprises the following spread spectrum sequences:
{1111111111111111},{0010101010101011},{01001100110011 01},{1001100110011001},{0111000011110001},{1010010110100 1 0 1}, {1 1 0 0 0 0 1 1 1 1 0 0 0 0 1 1}, {0 0 0 1 0 1 1 0 1 0 0 1 0 1 1 1}, {0 1 1 1 1 1 1 1 0 0 0 0 0 0 0 1}, {1 0 1 0 1 0 0 1 0 1 0 1 0 1 0 1}, {1 1 0 0 1 1 0 0 0 0 1 1 0 0 1 1}, {0 0 0 1 1 0 0 1 0 1 1 0 0 1 1 1}, {1 1 1 1 0 0 0 0 0 0 0 0 1 1 1 1}, {0 0 1 0 0 1 0 1 0 1 0 1 1 0 1 1}, {0 1 0 0 0 0 1 1 0 0 1 1 1 1 0 1}, and {1 0 0 1 0 1 1 0 0 1 1 0 1 0 0 1}.

8. The method according to claim 5, wherein $l=1$, and the spread spectrum sequence set comprises the following spread spectrum sequences:
{1 1 1 1 1 1 1 1 1 1 1 1 1 1 1 1}, {1 1 1 1 0 1 1 0 0 1 0 1 0 0 0 0}, {1 0 1 1 1 0 1 1 0 0 1 0 1 0 0 0}, {1 0 0 1 1 1 0 1 1 0 0 1 0 1 0 0}, {1 0 0 0 1 1 1 0 1 1 0 0 1 0 1 0}, {1 0 0 0 0 1 1 1 0 1 1 0 0 1 0 1},{1100001110110010},{1010000111011001},{110100001110 110 0}, {1 0 1 0 1 0 0 0 0 1 1 1 0 1 1 0}, {1 0 0 1 0 1 0 0 0 0 1 1 1 0 1 1}, {1 1 0 0 1 0 1 0 0 0 0 11101},{1110010100001110},{1011001010000111},{1101100101 0 0 0 0 1 1}, and {1 1 1 0 1 1 0 0 1 0 1 0 0 0 0 1}.

9. The method according to claim 5, wherein $l = L$, and the spread spectrum sequence set comprises the following spread spectrum sequences:
{1 1 1 1 1 1 1 1 1 1 1 1 1 1 1 1}, {0 1 1 1 0 1 1 0 0 1 0 1 0 0 0 1}, {0 0 1 1 1 0 1 1 0 0 1 0 1 0 0 1}, {0 0 0 1 1 1 0 1 1 0 0 1 0 1 0 1}, {0 0 0 0 1 1 1 0 1 1 0 0 1 0 1 1}, {1 0 0 0 0 1 1 1 0 1 1 0 0 1 0 1},{0100001110110011},{1010000111011001},{0101000011101 1 0 1}, {0 0 1 0 1 0 0 0 0 1 1 1 0 1 1 1}, {1 0 0 1 0 1 0 0 0 0 1 1 1 0 1 1}, {1 1 0 0 1 0 1 0 0 0 0 11101},{0110010100001111},{1011001010000111},{1101100101 0 0 0 0 1 1}, and {1 1 1 0 1 1 0 0 1 0 1 0 0 0 0 1}.

10. The method according to any one of claims 2 to 9, wherein the first signal is obtained by performing offset quadrature phase shift keying modulation on the second signal.

11. The method according to any one of claims 1 to 10, wherein the N data symbols are obtained based on a data bit comprised in a physical layer protocol data unit, and the receiving a first signal comprises:
receiving the first signal by using a narrowband.

12. A signal processing method, comprising:

obtaining a first signal based on a spread spectrum sequence set and N data symbols, wherein the spread spectrum sequence set comprises M spread spectrum sequences whose lengths are L, the M spread spectrum sequences whose lengths are L one-to-one correspond to M data symbols with different values, values of $l^{th}$ chips comprised in any two of the M spread spectrum sequences whose lengths are L are the same, N, M, and L are positive integers, and $l=1$ or $l=L$; and
sending the first signal.

13. The method according to claim 12, wherein the obtaining a first signal based on a spread spectrum sequence set and N data symbols comprises:

performing spread spectrum processing on the N data symbols based on the spread spectrum sequence set to obtain a second signal; and
modulating the second signal to obtain the first signal, wherein
the second signal comprises a first sub-signal and a second sub-signal;
the first sub-signal is obtained by performing spread spectrum processing on a $(2n+1)^{th}$ data symbol in the N data symbols based on a first spread spectrum sequence in the spread spectrum sequence set, the first spread spectrum sequence corresponds to the $(2n+1)^{th}$ data symbol, n is an integer, and $0 \leq n \leq (N-1)/2$; and
the second sub-signal is obtained by performing spread spectrum processing on a $2n^{th}$ data symbol in the N symbols based on a second spread spectrum sequence, the second spread spectrum sequence is obtained by performing first processing on a third spread spectrum sequence that is in the spread spectrum sequence set and that corresponds to the $2n^{th}$ data symbol, and a value of an $|l-(L+1)|^{th}$ chip comprised in the second spread spectrum sequence is the same as a value of an $l^{th}$ chip comprised in the third spread spectrum sequence.

14. The method according to claim 13, wherein the first processing comprises cyclic shifting and/or inversion.

15. The method according to any one of claims 12 to 14, wherein a Hamming distance between any two different spread spectrum sequences in the spread spectrum sequence set is not less than 8.

16. The method according to claim 15, wherein L=16, M=16, and in a matrix comprising the M spread spectrum sequences whose lengths are L, each column other than an $l^{th}$ column comprises eight 1s and eight 0s, and each row of the matrix corresponds to one spread spectrum sequence in the spread spectrum sequence set.

17. The method according to claim 16, wherein $l$=1, and the spread spectrum sequence set comprises the following spread spectrum sequences:
{1 1 1 1 1 1 1 1 1 1 1 1 1 1 1 1}, {1 0 1 0 1 0 1 0 1 0 1 0 1 0 1 0}, {1 1 0 0 1 1 0 0 1 1 0 0 1 1 0 0}, {1001100110011001}, {1111000011110000}, {1010010110100 1 0 1}, {1 1 0 0 0 0 1 1 1 1 0 0 0 0 1 1}, {1 0 0 1 0 1 1 0 1 0 0 1 0 1 1 0}, {1 1 1 1 1 1 1 1 0 0 0 0 0 0 0 0}, {1 0 1 0 1 0 1 0 0 1 0 1 0 1 0 1}, {1 1 0 0 1 1 0 0 0 0 1 1 0 0 1 1}, {1 0 0 1 1 0 0 1 0 1 1 0 0 1 1 0}, {1 1 1 1 0 0 0 0 0 0 0 0 1 1 1 1}, {1 0 1 0 0 1 0 1 0 1 0 1 1 0 1 0}, {1 1 0 0 0 0 1 1 0 0 1 1 1 1 0 0}, and {1 0 0 1 0 1 1 0 0 1 1 0 1 0 0 1}.

18. The method according to claim 16, wherein $l$= L, and the spread spectrum sequence set comprises the following spread spectrum sequences:
{1 1 1 1 1 1 1 1 1 1 1 1 1 1 1 1}, {0 0 1 0 1 0 1 0 1 0 1 0 1 0 1 1}, {0 1 0 0 1 1 0 0 1 1 0 0 1 1 0 1}, {1001100110011001}, {0111000011110001}, {1010010110100 1 0 1}, {1 1 0 0 0 0 1 1 1 1 0 0 0 0 1 1}, {0 0 0 1 0 1 1 0 1 0 0 1 0 1 1 1}, {0 1 1 1 1 1 1 1 0 0 0 0 0 0 0 1}, {1 0 1 0 1 0 1 0 0 1 0 1 0 1 0 1}, {1 1 0 0 1 1 0 0 0 0 1 1 0 0 1 1}, {0 0 0 1 1 0 0 1 0 1 1 0 0 1 1 1}, {1 1 1 1 0 0 0 0 0 0 0 0 1 1 1 1}, {0 0 1 0 0 1 0 1 0 1 0 1 1 0 1 1}, {0 1 0 0 0 0 1 1 0 0 1 1 1 1 0 1}, and {0 0 1 0 1 1 0 0 1 1 0 1 0 0 1}.

19. The method according to claim 16, wherein $l$=1, and the spread spectrum sequence set comprises the following spread spectrum sequences:
{1 1 1 1 1 1 1 1 1 1 1 1 1 1 1 1}, {1 1 1 1 0 1 1 0 0 1 0 1 0 0 0 0}, {1 0 1 1 1 0 1 1 0 0 1 0 1 0 0 0}, {1001110110010100}, {1000111011001010}, {1000011101100 101}, {1100001110110010}, {1010000111011001}, {110100001110 1100}, {1010100001110110}, {1001010000111011}, {11001010000 11101}, {1110010100001110}, {1011001010000111}, {1101100101 0 0 0 0 1 1}, and {1 1 1 0 1 1 0 0 1 0 1 0 0 0 0 1}.

20. The method according to claim 16, wherein $l$= L, and the spread spectrum sequence set comprises the following spread spectrum sequences:
{1 1 1 1 1 1 1 1 1 1 1 1 1 1 1 1}, {0 1 1 1 0 1 1 0 0 1 0 1 0 0 0 1}, {0 0 1 1 1 0 1 1 0 0 1 0 1 0 0 1}, {0 0 0 1 1 1 0 1 1 0 0 1 0 1 0 1}, {0 0 0 0 1 1 1 0 1 1 0 0 1 0 1 1}, {1 0 0 0 0 1 1 1 0 1 1 0 0 1 0 1}, {0100001110110011}, {1010000111011001}, {0 1 0 1 0 0 0 0 1 1 1 0 1 1 0 1}, {0 0 1 0 1 0 0 0 0 1 1 1 0 1 1 1}, {1 0 0 1 0 1 0 0 0 0 1 1 1 0 1 1}, {1 1 0 0 1 0 1 0 0 0 0 1 1 1 0 1}, {0110010100001111}, {1011001010000111}, {1101100101 0 0 0 0 1 1}, and {1 1 1 0 1 1 0 0 1 0 1 0 0 0 0 1}.

21. The method according to any one of claims 13 to 20, wherein the modulating the second signal to obtain the first signal comprises:
performing offset quadrature phase shift keying modulation on the second signal to obtain the first signal.

22. The method according to any one of claims 12 to 21, wherein the N data symbols are obtained based on a data bit comprised in a physical layer protocol data unit, and the sending the first signal comprises:
sending the first signal by using a narrowband.

23. An apparatus, comprising a transceiver unit and a processing unit, wherein

the transceiver unit is configured to receive a first signal, the first signal is obtained based on a spread spectrum sequence set and N data symbols, the spread spectrum sequence set comprises M spread spectrum sequences whose lengths are L, the M spread spectrum sequences whose lengths are L one-to-one correspond to M data symbols with different values, values of $l^{th}$ chips comprised in any two of the M spread spectrum sequences whose lengths are L are the same, N, M, and L are positive integers, and $l$=1 or $l$=L; and
the processing unit is configured to perform frequency offset estimation based on the first signal.

24. An apparatus, comprising a transceiver unit and a processing unit, wherein

the processing unit is configured to obtain a first signal based on a spread spectrum sequence set and N data symbols, the spread spectrum sequence set comprises M spread spectrum sequences whose lengths are L, the M spread spectrum sequences whose lengths are L one-to-one correspond to M data symbols with different values, values of $l^{th}$ chips comprised in any two of the M spread spectrum sequences whose lengths are L are the same, N, M, and L are positive integers, and $l=1$ or $l=L$; and
the transceiver unit is configured to send the first signal.

25. An apparatus, comprising:
a processor, configured to execute computer instructions stored in a memory, to enable the apparatus to perform the method according to any one of claims 1 to 11, or to enable the apparatus to perform the method according to any one of claims 12 to 22.

26. A computer-readable storage medium, configured to store a computer program, wherein the computer program comprises instructions for implementing the method according to any one of claims 1 to 11, or comprises instructions for implementing the method according to any one of claims 12 to 22.

PAN coordinator

PAN coordinator

(A)

● FFD

○ RFD

↔ Communication stream

(B)

FIG. 1

PPDU

| SHR | PHR | Payload |
|-----|-----|---------|

| Preamble | SFD |
|----------|-----|

FIG. 2

Binary data of a PPDU → Bit-to-symbol mapping → Symbol-to-chip mapping → O-QPSK modulation → Modulated signal

FIG. 3

I-phase $2T_c$

| $c_0$ | $c_2$ | $c_4$ | $c_6$ | ... | $c_{12}$ | $c_{14}$ |

Q-phase

| $c_1$ | $c_3$ | $c_5$ | $c_7$ | ... | $c_{13}$ | $c_{15}$ |

$T_c$

FIG. 4

Chip value   0  0  1  1  0  1  0  0  0  1  0  0  0  1  0  0

I

Q

After modulation   1  $j$  −1  −$j$  1  −$j$  1  $j$  1  −$j$  1  $j$  1  −$j$  1  $j$

FIG. 5

Method 600

| Transmit end device | | Receive end device |

S610: Obtain a first signal based on a spread spectrum sequence set and N data symbols

S620: First signal

S630: Perform frequency offset estimation based on the first signal

FIG. 6

FIG. 7

1000

```
┌─────────────────────────────────────┐
│                                     │
│   ┌─────────────────────────────┐   │
│   │    Transceiver unit 1010    │   │
│   └─────────────────────────────┘   │
│                 │                   │
│   ┌─────────────────────────────┐   │
│   │    Processing unit 1020     │   │
│   └─────────────────────────────┘   │
│                                     │
└─────────────────────────────────────┘
```

FIG. 8

2000

```
┌──────────────────────────────────────────────┐
│                                              │
│  ┌──────────────────┐    ┌─────────────────┐ │
│  │  Processor 2010  │────│ Transceiver 2030│ │
│  └──────────────────┘    └─────────────────┘ │
│           │                                  │
│  ┌──────────────────┐                        │
│  │   Memory 2020    │                        │
│  └──────────────────┘                        │
│                                              │
└──────────────────────────────────────────────┘
```

FIG. 9

```
┌──────────────────────────────────────┐
│          Chip system 3000            │
│                                      │
│   ┌──────────────────────────────┐   │
│   │     Logic circuit 3010       │   │
│   └──────────────────────────────┘   │
│                 │                    │
│   ┌──────────────────────────────┐   │
│   │  Input/Output interface 3020 │   │
│   └──────────────────────────────┘   │
│                                      │
└──────────────────────────────────────┘
```

FIG. 10

## INTERNATIONAL SEARCH REPORT

| International application No. |
| --- |
| **PCT/CN2023/082729** |

**A. CLASSIFICATION OF SUBJECT MATTER**

H04L 27/00(2006.01)i; H04B1/69(2011.01)i

According to International Patent Classification (IPC) or to both national classification and IPC

**B. FIELDS SEARCHED**

Minimum documentation searched (classification system followed by classification symbols)

IPC:H04L H04B H04W

Documentation searched other than minimum documentation to the extent that such documents are included in the fields searched

Electronic data base consulted during the international search (name of data base and, where practicable, search terms used)

CJFD, CNTXT, ENTXTC, ENTXT, VCN, DWPI, VEN, 3GPP, IEEE: 第一, 固定, 扩频, 扩谱, 扩展, 码片, 符号, 频率偏移, 频偏, 频偏偏移, 首, 数值, 随机, 同样, 同一, 头, 尾, 相等, 相同, 信道测量, 信道估计, 信道预测, 信道预估, 信道质量, 信道质量估计, 信号估计, 序列, 一样, 值, 周期, CFO, dsss, chip, symbol, spreading, sequence, value, number

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111245758 A (HENAN UNIVERSITY OF SCIENCE & TECHNOLOGY) 05 June 2020 (2020-06-05)<br>    description, paragraphs [0009]-[0020] | 1-26 |
| Y | 王庆华;邹永庆;王烁; (WANG, Qinghua; ZOU, Yongqing; WANG, shuo;). "一种简单快速的TD-SCDMA自动频偏估计方法 (Non-official translation: A Simple and Fast Automatic Frequency Bias Estimation Method for TD-SCDMA)"<br>硅谷 (Silicon Valley), No. 14, 23 July 2011 (2011-07-23),<br>    chapter 1 and chapter 2 | 1-26 |
| A | CN 109951852 A (HUAWEI TECHNOLOGIES CO., LTD.) 28 June 2019 (2019-06-28)<br>    entire document | 1-26 |
| A | US 2019207792 A1 (TEXAS INSTRUMENTS INC.) 04 July 2019 (2019-07-04)<br>    entire document | 1-26 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **13 June 2023** | **21 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

## INTERNATIONAL SEARCH REPORT
### Information on patent family members

International application No.

**PCT/CN2023/082729**

| Patent document cited in search report | | | Publication date (day/month/year) | Patent family member(s) | | | Publication date (day/month/year) |
|---|---|---|---|---|---|---|---|
| CN | 111245758 | A | 05 June 2020 | None | | | |
| CN | 109951852 | A | 28 June 2019 | WO | 2019120126 | A1 | 27 June 2019 |
| US | 2019207792 | A1 | 04 July 2019 | CN | 110011687 | A | 12 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211021969

- CN 202211000990X